# EUROPEAN PATENT APPLICATION

(11) **EP 4 299 383 A1**
(43) Date of publication of application: **03.01.2024**
(21) Application number: 23180056.6
(22) Date of filing: 19.06.2023
(51) Int. Cl.: B60R 11/02, B60R 11/00

(54) **DEVICE SECUREMENT**

(30) Priority: 29.06.2022 US 202263356743 P
(71) Applicant: Apple Inc., Cupertino, CA 95014 (US)
(72) Inventor: STORM, Trent, Cupertino, 95014 (US); JUE, Derrick T., Cupertino, 95014 (US); OTTAWAY, Luke T., Cupertino, 95014 (US); BUEHLER, Jesse T., Cupertino, 95014 (US); QI, Zhang, Cupertino, 95014 (US)
(74) Representative: COPA Copenhagen Patents

(57) **Abstract**

A storage system for an electronic device includes a base coupled to a structural portion and a support portion (106) coupled to the base. A platform (210) is coupled to the support portion, is configured to hold the electronic device, and is movable relative to the support portion between a stored configuration and a deployed configuration. The platform can be selectively adjusted to maintain a non-zero angular orientation relative to the support portion when in the deployed configuration, and the platform forms an outer surface of the support portion when in the stored configuration.

## Description

### CROSS-REFERENCE TO RELATED APPLICATIONS

This application claims the benefit of United States Provisional Application No. 63/356,743 filed on June 29, 2022, the contents of which are hereby incorporated by reference in its entirety for all purposes.

### FIELD

The present disclosure relates generally to the field of physically securing an electronic device.

### BACKGROUND

An electronic device may be used by an occupant while moving. In some instances the electronic device may be placed on a surface. When the motion changes (e.g., by acceleration, deceleration, turning, etc.), the electronic device may move in response to the change in motion.

### SUMMARY

One aspect of the disclosure is a storage system for an electronic device that includes a support coupled to a structural member of a vehicle and a table portion coupled to the support. A platform is coupled to the table portion, is configured to hold the electronic device, and is movable relative to the table portion between a stored configuration and a deployed configuration. The platform can be selectively adjusted to maintain a non-zero angular orientation relative to the table portion when in the deployed configuration, and the platform forms an outer surface of the table portion when in the stored configuration.

Another aspect of the disclosure is a tether system for an electronic device that includes a support coupled to a structural member of a vehicle, a table portion coupled to the support, and a hub coupled to the table portion. A cable includes a first end and a second end, where the first end is coupled to the hub and is coupled to a power source. The second end is coupled to a connector configured to connect to the electronic device. The connector includes a charging connector configured to provide power to the electronic device and a locking connector configured to automatically secure the connector to the electronic device when the locking connector is inserted into an internal portion of the electronic device. The locking connector is released from the internal portion of the electronic device in a different manner than it is inserted.

Yet another aspect of the disclosure is a system for securing an electronic device that includes a table portion within a movable object. A platform is coupled to the table portion, is configured to hold the electronic device, and is movable relative to the table portion between a stored configuration and a deployed configuration. A surface of the platform is approximately aligned with a surface of the table portion when in the stored configuration, and a hub is coupled to the table portion. A cable includes a first end and a second end, where the first end is fixed to the hub and is coupled to a power source and the second end is coupled to a connector configured to connect to the electronic device.

### BRIEF DESCRIPTION OF THE DRAWINGS

FIG. 1 is a side view of a cabin of a vehicle.
FIG. 2 is an illustration of a table portion in the cabin of the vehicle of FIG. 1 with a platform in a stored configuration.
FIG. 3 is an illustration of the platform of FIG. 2 in a deployed configuration.
FIG. 4 is a side view of the table portion of FIG. 3.
FIG. 5 is an illustration of another embodiment of the table portion of FIG. 1 with a platform in a stored configuration.
FIG. 6 is an illustration of the platform of FIG. 5 in a deployed configuration.
FIGS. 7A-B are illustrations of a tether system that includes the table portion of FIG. 1 with a hub in different locations.
FIG. 8 is a schematic representation of the hub of FIGS. 7A-B.
FIG. 9 is an illustration of a connector.
FIG. 10 is a schematic representation of a controller.

### DETAILED DESCRIPTION

The disclosure herein relates to systems and devices for securing an electronic device to a surface in a vehicle. In some implementations, the surface in the vehicle is a table portion positioned near an occupant that provides the occupant a surface on which to place the electronic device to use the electronic device. Examples of an electronic device include a laptop computer, a tablet computer, a mobile phone, a gaming system, etc. As the vehicle moves (e.g., accelerates, decelerates, turns, changes directions, etc.) the electronic device may move along the surface of the table portion and may fall from the table portion.

Some embodiments disclosed herein are directed to a system for storing and/or securing the electronic device where the table portion includes a platform that is movable relative to the table portion. The platform can move from a stored position, in which an outer surface of the platform forms an outer surface of the table portion, to a deployed position, in which the platform is configured to secure the electronic device. In some embodiments, the platform can be selectively adjusted to maintain a non-zero angular orientation relative to the table portion. The platform may also include connectors (e.g., mechanical connectors, magnetic connectors, etc.) configured to secure the electronic device to the platform.

Other embodiments disclosed herein are directed to a tether system for securing the electronic device to the table portion. The tether system may include a hub coupled to the table portion and a cable that extends from the hub to a connector. The connector may include a charging connector and a locking connector, where the charging connector is configured to provide power to the electronic device and the locking connector is configured to secure the electronic device to the hub and/or table portion.

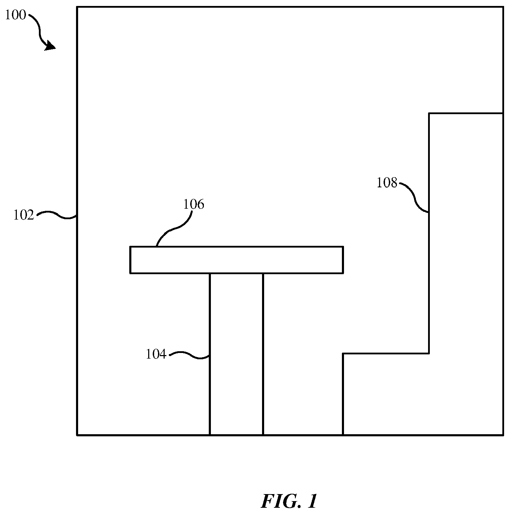

FIG. 1 is a side view of a cabin 102 of a vehicle 100. The vehicle 100 can be any type of vehicle including, but not limited to, gas or diesel-powered vehicles, electric vehicles, boats or other marine vehicles, aircraft (e.g., airplanes, helicopters, etc.), remote-controlled vehicles, or any other type of movable object.

The cabin 102 includes a base 104 that is coupled to the cabin 102 of the vehicle 100. In some embodiments, the base 104 is coupled to a structural portion of the vehicle 100. For example, the base 104 may be coupled to a structural portion that supports the various components and systems of the vehicle 100. The structural portion may include a structural support beam that extends longitudinally along the length of the vehicle 100 or a crossportion beam that extends between two longitudinal support beams. As shown, the base 104 is positioned in a generally vertical orientation and extends generally upward from a floor of the vehicle 100, however the base 104 may be positioned in various orientations and may be coupled to the vehicle 100 in various locations. For example, the base 104 may be coupled to a structural portion that extends around an outer portion of the vehicle 100 (e.g., a pillar) or that extends along a roof or upper portion of the vehicle 100. Accordingly, the base 104 may be positioned in a generally horizontal orientation and extend generally sideways from a pillar of the vehicle 100. The base 104 may also be positioned in a generally vertical orientation and extend generally downward from the roof or upper portion of the vehicle 100.

A table portion 106 may be coupled to the support, and is positioned and configured to provide a surface on which an electronic device can be placed by an occupant of the vehicle 100. The table portion 106 may be positioned in a generally horizontal orientation and is positioned near a seat 108 in which an occupant of the vehicle 100 may sit. In some implementations, the occupant may store the electronic device on the table portion 106. The occupant may also use the table portion 106 as a workstation from which the occupant operates the electronic device.

The table portion 106 is sized and configured for use by one or more occupants of the vehicle 100 when the vehicle 100 is in motion. For example, the table portion 106 may be used as a workstation by one or more occupants. Accordingly, the table portion 106 is approximately stationary relative to the vehicle 100 when the vehicle 100 is in motion. In some embodiments, the table portion 106 may extend across approximately half a width of the seat 108. In some embodiments, the table portion 106 may extend between approximately fifty percent and approximately seventy-five percent across the width of the seat 108. The table portion 106 may also extend between approximately twenty-five percent and approximately fifty percent across the width of the seat 108. In some implementations, the table portion 106 may extend across multiple seats (e.g., the seat 108 may include two seats, three seats, etc.) where the seats may face the same direction and/or may be positioned opposite each other. Whether the seats face the same direction or are positioned opposite each other, the table portion 106 is sized and configured to allow an occupant in each of the seats to use the table portion 106 as a workstation simultaneously. Accordingly, the table portion 106 is configured to support the weight of, for example, multiple electronic devices simultaneously. In some implementations the multiple electronic devices are laptop computers, and the table portion 106 may be configured to support up to approximately fifty pounds.

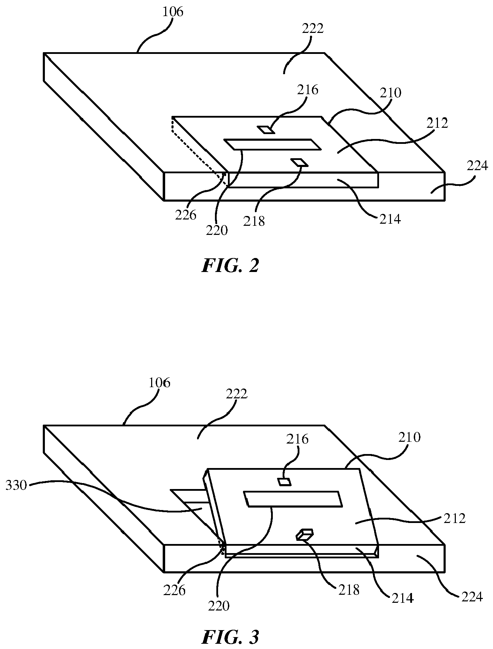

FIG. 2 is an illustration of the table portion 106 within the cabin 102 of the vehicle 100 (e.g., a movable object) of FIG. 1 with a platform 210 in a stored configuration. FIG. 3 is an illustration of the table portion 106 of FIG. 2 with the platform 210 in a deployed configuration. The table portion 106 is shown to be generally shaped as a parallelepiped, however the table portion 106 may include various shapes such as circular, oval, square, rectangular, irregular shapes, etc. The table portion 106 includes a top surface 222 and a side surface 224. In some embodiments, the top surface 222 is approximately flat to allow for objects to be placed on the top surface 222. The side surface 224 is oriented at an angle to the top surface 222. As shown, the side surface 224 is approximately perpendicular to the top surface 222, however the side surface 224 may be oriented at any angle relative to the top surface 222.

The table portion 106 also includes the platform 210 that is coupled to the table portion 106 and is configured to hold an electronic device. The platform 210 is movable between a stored configuration (shown in FIG. 2) and a deployed configuration (shown in FIG. 3), and includes a top surface 212 and a side surface 214. The top surface 212 may be approximately flat to allow for an electronic device to be placed on the top surface 212. The side surface 214 is oriented at an angle to the top surface 212. In some implementations, the top surface 212 is approximately aligned with the top surface 222 and forms at least part of the top surface 222 when the platform 210 is in the stored configuration. The side surface 214 is approximately aligned with at least part of the side surface 224 and forms at least part of the side surface 224 when the platform 210 is in the stored configuration. Accordingly, the platform 210 forms an outer surface of the table portion 106 when the platform 210 is in the stored configuration.

The platform 210 is shown to include a pull 216 that is configured to provide a surface an occupant can use to move the platform 210 from the stored configuration to the deployed configuration. In some implementations, the pull 216 is a recessed portion of the top surface 222 that includes an undercut sized to receive one or more fingers of the occupant. The pull 216 may also include a rotatable tab that is configured to rotate relative to the top surface 222 such that the tab can extend above the top surface 222 to provide the occupant a tab that extends from the top surface 222.

In some embodiments, the pull 216 is not present on the platform 210 and the platform 210 is configured to be manipulated in another manner. For example, table portion 106 may include a spring-loaded magnetic catch, and the platform 210 may include a magnet that corresponds to the spring-loaded magnetic catch. Accordingly, an occupant can depress the platform 210 to activate the spring-loaded magnetic catch. Upon releasing the platform 210, the spring-loaded magnetic catch can push the platform 210 upward such that the top surface 212 extends above the top surface 222, and the occupant can manipulate the platform 210 to move the platform 210 to the desired position.

As shown in FIG. 3, the platform 210 is in the deployed position and is at a non-zero angular orientation relative to the table portion 106. In some implementations, the platform 210 is coupled to the table portion 106 with a hinge 226 that is configured to maintain its angular position until a threshold force is imparted to the hinge 226. In some implementations, the hinge 226 may be a one-way friction hinge that allows the occupant to move the platform 210 from the stored configuration to the deployed configuration using a force that is lower than a threshold force value. The one-way friction hinge may also resist moving from the deployed configuration to the stored configuration unless acted upon by a force greater than the threshold force value. The threshold force value may be, for example, a force value greater than the force imparted to the platform 210 by the electronic device. In some implementations, the one-way friction hinge may be adjusted to change the threshold force value. For example, the occupant may adjust the one-way friction hinge to increase the threshold force value if the electronic device is a heavy device. Accordingly, the occupant can raise the platform 210 with negligible resistance from the one-way friction hinge, and the one-way friction hinge will prevent the platform 210 from moving to the stored configuration when the electronic device is placed on the platform 210. Therefore, the platform 210 can be selectively adjusted to maintain a non-zero angular orientation relative to the table portion 106 when in the deployed configuration. Though the connection between the platform 210 and the table portion 106 is described above as a one-way friction hinge, the platform 210 can be connected to the table portion 106 with any type of device or system that provides the functionality described above.

The table portion 106 defines a recess 330 that is sized and configured to receive the platform 210 when the platform 210 is in the stored configuration. In some implementations, the recess 330 extends from the top surface 222. The recess 330 may also extend from the side surface 224. In some embodiments, such as the embodiment shown in FIG. 3, the recess 330 extends from both the top surface 222 and the side surface 224.

The platform 210 is shown to include a coupling portion 220 that is configured to secure the electronic device to the platform 210. In some implementations, the coupling portion 220 includes a magnet configured to magnetically couple with a corresponding magnet on the electronic device or a housing for the electronic device (e.g., a protective case). The coupling portion 220 may also include a mechanical attachment configured to interface with a corresponding mechanical attachment on the electronic device or the housing for the electronic device. For example, the top surface 212 of the platform 210 may define a depression (e.g., the coupling portion 220) that is configured to receive a protrusion extending from the electronic device or the housing for the electronic device. As another example, the coupling portion 220 may include a protrusion configured to slidingly interface with a recess in the electronic device or the housing for the electronic device. Accordingly, the electronic device may be secured to the platform 210 by sliding the electronic device on the platform 210 when the protrusion is aligned with the recess. Other coupling portions and/or methods can be implemented.

The platform 210 also includes a foot 218 that is configured to prevent the electronic device from falling from the platform 210 when the platform 210 is in the deployed configuration. The foot 218 may include a rotatable tab that is configured to rotate relative to the top surface 222 such that the tab can extend above the top surface 222 to provide a surface to support the electronic device.

In some embodiments, the platform 210 includes both the coupling portion 220 and the foot 218. The platform 210 may also include only one of the coupling portion 220 or the foot 218. In some implementations, the platform 210 does not include the portion 220 or the foot 218 and instead includes an alternative way to secure the electronic device to the platform 210. For example, the top surface 212 may include a non-slip coating with a high coefficient of friction that prevents the electronic device from sliding on the top surface 212. The non-slip coating may include silicone, rubber, polyvinyl chloride, or any other type of material that can be applied to a surface and provide non-slip properties.

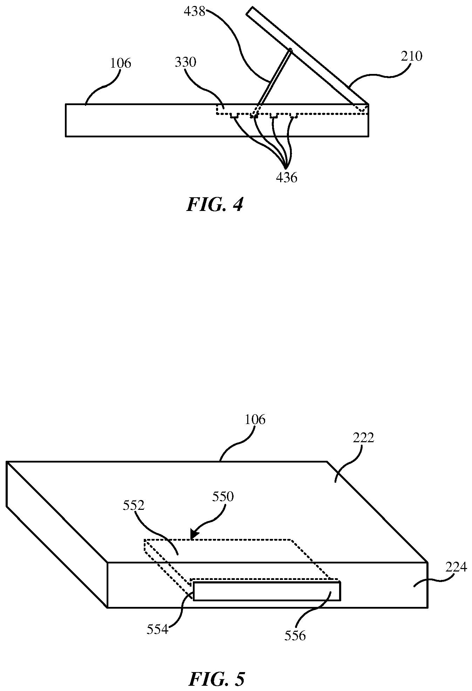

FIG. 4 is a side view of the table portion 106 of FIG. 3. In some implementations, the platform 210 may not include a rotatable connector like the one-way friction hinge described above. In such implementations, the platform 210 may include a leg 438 that extends from the platform 210 toward the recess 330. The leg 438 is configured to interface with one or more depressions 436 defined by the recess 330. When the leg 438 interfaces with one or more of the depressions 436, the leg 438 supports the platform 210 and prevents the platform 210 from falling back to the stored configuration when the electronic device is placed on the platform 210.

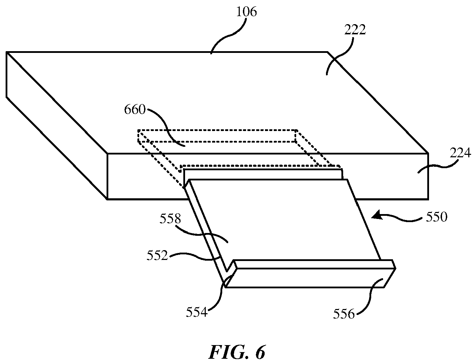

FIG. 5 is an illustration of another embodiment of the table portion 106 of FIG. 1 with a platform 550 in a stored configuration. FIG. 6 is an illustration of the table portion 106 of FIG. 5 with the platform 550 in a deployed configuration. The platform 550 includes a support portion 552 with a top surface 558 configured to support the electronic device. The platform 550 also includes a foot portion 554 extending from the support portion 552 that is configured to support the electronic device. The foot portion 554 includes a side surface 556 that is configured to be approximately aligned with the side surface 224 when the platform 550 is in the stored configuration. Accordingly, the platform 550 forms an outer surface of the table portion 106 when in the stored configuration.

The platform 550 may also include any of the features described with reference the platform 210 of FIGS. 2-3. For example, the platform 550 may include a pull similar to the pull 216, however the pull for the platform 550 may be located on the side surface 556. The platform 550 may also include the coupling portion 220 to secure the electronic device to the platform 550.

The table portion 106 includes a recess 660 configured to receive the platform 550 when the platform 550 is in the stored configuration. The recess may further define a rail on which the platform 550 may travel when moving from the stored configuration to the deployed configuration. The platform 550 may also be coupled to the table portion 106 with a rotatable connector similar to the hinge 226 described with reference to FIGS. 2-3. Accordingly, the platform 550 can be selectively adjusted to maintain a non-zero angular orientation relative to the table portion 106 when in the deployed configuration.

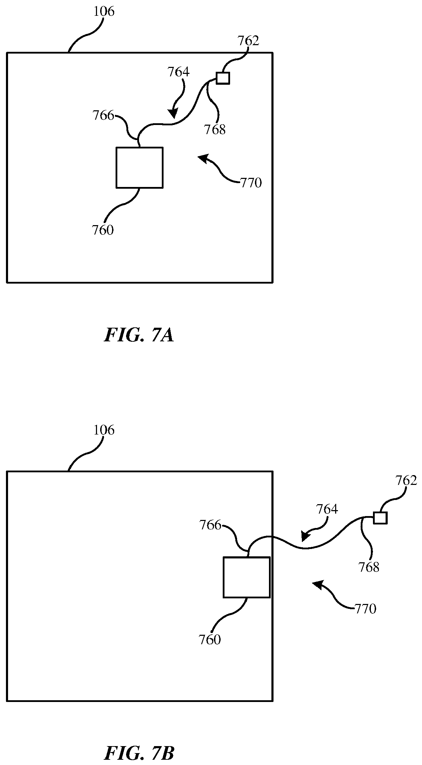

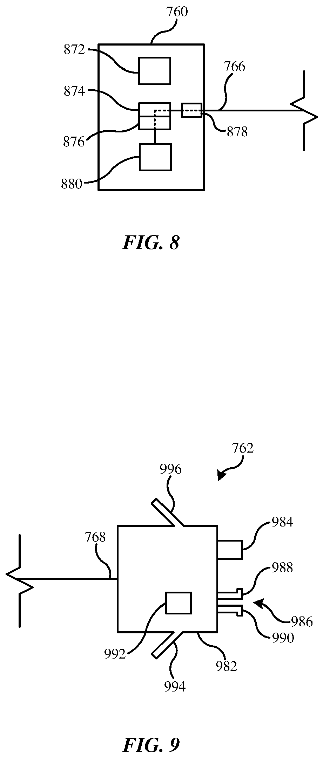

FIGS. 7A-B are illustrations of a tether system 770 that includes the table portion 106 of FIG. 1 with a hub 760 coupled to the table portion 106 in different locations. As shown, the table portion 106 includes a square cross-sectional shape, however the table portion 106 can include various cross-sectional shapes. For example, the table portion 106 may include a circular, oval, rhomboid, or other irregular cross-sectional shape. As shown in FIG. 7, the hub 760 may be positioned generally at a center or central portion of the table portion 106. As shown in FIG. 8, the hub 760 may be positioned generally at an outer edge of the table portion 106.

The tether system 770 also includes a cable 764 that extends between the hub 760 and a connector 762. The cable 764 includes a first end 766 and a second end 768, where the first end is coupled to the hub 760 and the second end is coupled to the connector 762 that is configured to connect to the electronic device. In some implementations, the first end 766 is removably coupled to the hub 760. The first end 766 may also be fixed to the hub 760. In implementations where the hub 760 is positioned generally at the central portion of the table portion 106 (such as shown in FIG. 7A), the cable 764 is sized to allow the electronic device to be positioned on the table portion 106 when the electronic device is coupled to the cable 764. However, if the occupant desired to place the electronic device on his/her lap, the occupant may have to disconnect the electronic device from the cable 764. In implementations where the hub 760 is positioned generally at the outer edge of the table portion 106 (such as shown in FIG. 7B), the cable 764 is sized to allow the electronic device to be positioned on the lap of the occupant or on the table portion 106.

FIG. 8 is a schematic representation of the hub 760 of FIGS. 7A-B. The hub 760 is shown to include a controller 872, a retractor 874, a damper 876, a brake 878, and a power source 880. The retractor 874 is coupled to a free end of the first end 766 of the cable 764 and is configured to automatically draw the cable 764 toward the hub 760 at a predetermined speed when the connector 762 is disconnected from the electronic device. The retractor 874 may include a spool around which the cable 764 is wound as the cable 764 is drawn into the hub 760. The retractor 874 may also include a resilient portion configured to cause the cable 764 to be drawn into the retractor 874. In some implementations, the resilient portion is a torsion spring (e.g., a flat wire that is wound in a spiral shape) where one end of the torsion spring is fixed to the retractor 874 and the other end of the torsion spring is fixed to the cable 764. Other implementations of the resilient portion may be used.

The damper 876 is coupled to the retractor 874 and/or the cable 764 and is configured to regulate a speed at which the cable 764 is drawn toward the hub 760 when the connector 762 is disconnected from the electronic device. The damper 876 can be a one-way damper (e.g., the speed of the cable 764 is only regulated when the cable 764 is drawn toward the hub 760) or a two-way damper (e.g., the speed of the cable 764 is regulated when the cable 764 is drawn toward or away from the hub 760). Accordingly, the damper 876 can include one or more of a vane damper, a gear damper, a disc damper, and a barrel damper.

The brake 878 may be coupled to the cable 764, as shown in FIG. 8, but the brake 878 may also be coupled to the retractor 874 in some embodiments. The brake 878 is configured to prevent the cable 764 from extending away from the hub 760 at a speed that is greater than a threshold speed. For example, if the vehicle 100 suddenly stops (e.g., from a braking action, impact with an object, etc.), accelerates, or otherwise moves quickly in a direction, the brake 878 prevents the electronic device from pulling the cable 764 away from the hub 760 at a speed greater than the threshold speed.

The power source 880 may be any device configured to supply power to a device connected to the power source 880. The power source 880 may be a battery separate from the main power source of the vehicle 100 and may draw power from the main power source of the vehicle 100. The power source 880 may also be a battery that is not connected to the main power source of the vehicle 100. The first end 766 of the cable 764 is coupled to the power source 880 and the cable 764 is configured to deliver power from the power source 880 to the electronic device connected to the connector 762.

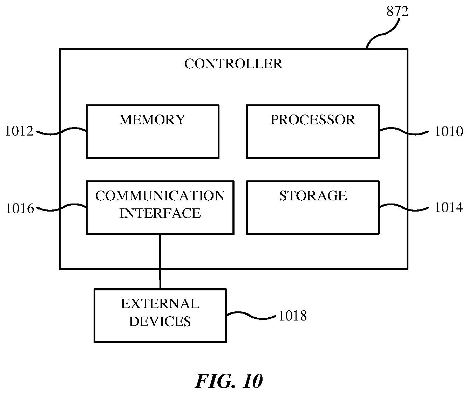

The controller 872 is in communication with the retractor 874, the damper 876, and the brake 878. The controller 872 may also be in operative communication with various systems of the vehicle 100 (e.g., a propulsion system, a drivetrain, a suspension system, a collision detection system, a braking system, etc.). In some implementations, the controller 872 is located in or on the vehicle 100 (e.g., a vehicle computer). The controller 872 may also be located remotely (e.g., an external computer) from the vehicle 100. For example, the controller 872 may be located in a different physical location than the vehicle 100 (e.g., as part of a cloud-based system). The controller 872 is configured to receive a signal from one or more of the various systems of the vehicle 100 (e.g., a signal related to proximity of an object to the vehicle 100) and includes components (e.g., a processor, etc.) configured by a software algorithm to make a prediction based on the signal. The controller 872 is further described with reference to FIG. 10. In an example embodiment, the controller 872 is configured to predict contact between the vehicle 100 an object. Based on the prediction, the controller 872 is configured to cause the retractor 874 to automatically draw the cable 764 toward the hub 760.

FIG. 9 is an illustration of the connector 762. The connector 762 includes a housing 982 coupled to the second end 768. The housing 982 includes a first wing 994, a second wing 996, and a sliding tab 992. The connector 762 also includes a charging connector 984 and a locking connector 986. The locking connector 986 includes a first arm 988 and a second arm 990.

The charging connector 984 is configured to provide power to the electronic device and may include any type of charging extension configured to connect to a corresponding charging port of the electronic device. Examples of the charging connector 984 include a USB connection (e.g., USB-A, USB-B, USB-C, Micro-USB, Mini-USB, etc.) a thunderbolt connection, a lightning connection, or any other type of connection that can provide power to an electronic device.

The locking connector 986 is configured to secure the connector 762 to the electronic device. In some implementations, the electronic device includes a locking port that extends into an internal portion of the electronic device and is configured to receive the locking connector 986. As the locking connector 986 is inserted into the electronic device, one or more of the first arm 988 and the second arm 990 may be directed toward the opposite arm by the locking port. When the locking connector 986 is fully inserted into the internal portion of the electronic device, one or more of the first arm 988 and the second arm 990 may be released by the locking port such that the first arm 988 and the second arm 990 move toward their original positions, thereby locking the connector 762 to the electronic device. Accordingly, the locking connector 986 is configured to automatically secure the connector 762 to the electronic device when the locking connector 986 is inserted into the internal portion of the electronic device. Other implementations of the locking connector 986 may be used. For example, the locking connector 986 may include only one arm, more than two arms, a barbed component, a bayonet connector, etc.

In some embodiments, the first arm 988 and the second arm 990 may be coupled to the second wing 996 and the first wing 994, respectively. To remove the locking connector 986 from the electronic device, the occupant may move the second wing 996 and the first wing 994 toward the housing 982, which may cause the first arm 988 and the second arm 990 to move toward each other. The occupant may then remove the locking connector 986 from the electronic device while holding the first wing 994 and the second wing 996.

In another example embodiment, the sliding tab 992 may be coupled to the first arm 988 and the second arm 990. The occupant may slide the sliding tab 992 toward or away from the second end 768 to cause the first arm 988 and the second arm 990 to move toward each other. The occupant may then remove the locking connector 986 from the electronic device while holding the sliding tab 992 in place.

Various other implementations may be used to remove the locking connector 986 from the electronic device. In each implementation, the locking connector 986 is released from the internal portion of the electronic device in a different manner than it is inserted (e.g., by squeezing the first wing 994 and the second wing 996 or sliding the sliding tab 992).

FIG. 10 is a schematic representation of the controller 872 of FIG. 8. The controller 872 may be used to implement the systems and methods disclosed herein. For example, the controller 872 may receive data related to operation of the vehicle 100 and control operation of the hub 760 in response. In an example hardware configuration, the controller 872 generally includes a processor 1010, a memory 1012, a storage 1014, and a communication interface 1016. Data received from the vehicle 100 may include data related to a change in acceleration, speed, and/or orientation of the vehicle 100, and may also include data related to predicted contact with an object, etc. The processor 1010 may be any suitable processor, such as a central processing unit, for executing computer instructions and performing operations described thereby. The memory 1012 may be a volatile memory, such as random-access memory (RAM). The storage 1014 may be a non-volatile storage device, such as a hard disk drive (HDD) or a solid-state drive (SSD). The storage 1014 may form a computer readable medium that stores instructions (e.g., code) executed by the processor 1010 for operating external devices 1018, for example, in the manners described above and below. The communication interface 1016 is in communication with, for example, the external devices 1018, for sending to and receiving from various signals (e.g., control signals and/or notifications). The external devices 1018 may include, for example, the retractor 874, the damper 876, and/or the brake 878. The controller 872 may control operation of one or more of the retractor 874, the damper 876, and the brake 878. For example, the controller 872 may cause the brake 878 to engage the cable 764 when the controller 872 predicts contact between the vehicle 100 and the object to prevent the electronic device from falling or contacting an occupant or another portion of the vehicle 100. In addition, the controller 872 may cause the damper 876 to slow the retraction of the cable 764 into the hub 760 if the cable 764 is released from the electronic device and the occupant lets go of the cable 764 and/or the connector 762.

In some implementations, a tether system for an electronic device may include a support coupled to a structural portion of a vehicle, a table portion coupled to the support, a hub coupled to the table portion, and a cable including a first end and a second end. The first end may be coupled to the hub and may be coupled to a power source. The second end may be coupled to a connector configured to connect to the electronic device. The connector may include a charging connector configured to provide power to the electronic device. The connector may also include a locking connector configured to automatically secure the connector to the electronic device when the locking connector is inserted into an internal portion of the electronic device. The locking connector may be released from the internal portion of the electronic device in a different manner than it is inserted.

The hub may include a retractor configured to automatically draw the cable toward the hub when the connector is disconnected from the electronic device.

The hub may include a retractor that is configured to automatically draw the cable toward the hub based on a prediction that contact between the vehicle and an object will occur.

The retractor may include a damper configured to regulate a speed at which the cable is drawn toward the hub when the connector is disconnected from the electronic device.

The hub may include a brake configured to prevent the cable from extending away from the hub at a speed that is greater than a threshold speed.

The hub may be positioned generally at a center of the table portion.

The hub may be positioned generally at an outer edge of the table portion.

In some implementations, a system for securing an electronic device may include a table portion within a movable object. A platform may be coupled to the table portion and may be configured to hold the electronic device. The platform may be movable relative to the table portion between a stored configuration and a deployed configuration. A surface of the platform may be approximately aligned with a surface of the table portion when in the stored configuration. A hub may be coupled to the table portion. A cable may include a first end that is fixed to the hub and is coupled to a power source. The cable may include a second end that is coupled to a connector and is configured to connect to the electronic device.

The hub may include a retractor configured to automatically draw the cable toward the hub at a predetermined speed when the connector is disconnected from the electronic device.

The connector may include a charging connector configured to provide power to the electronic device and a locking connector configured to secure the connector to the electronic device.

The table portion may include a top surface and a side surface that is oriented at an angle to the top surface. The table portion may define a recess that extends from the top surface or the side surface, and the recess may be configured to receive the platform when in the stored configuration.

As described above, one aspect of the present technology is the gathering and use of data available from various sources for use in operating and controlling the tether system 770. As an example, such data may identify the user (e.g., the occupant) and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference related information that allows adjustment of operation parameters according to the user preferences. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for operation of the devices disclosed herein, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user preference information may be determined each time the tether system 770 is used, such as by entering user preferences in real time, and without subsequently storing the information or associating with the particular user.

Exemplary systems are set out in the following items:
1. A storage system for an electronic device, comprising:
   a support coupled to a structural member of a vehicle;
   a table portion coupled to the support; and
   a platform coupled to the table portion and configured to hold the electronic device, wherein the platform is movable relative to the table portion between a stored configuration and a deployed configuration, wherein the platform can be selectively adjusted to maintain a non-zero angular orientation relative to the table portion when in the deployed configuration, wherein the platform forms an outer surface of the table portion when in the stored configuration.
2. The storage system of item 1, wherein the platform includes a coupling mechanism configured to secure the electronic device to the platform.
3. The storage system of item 2, wherein the coupling mechanism includes a magnet.
4. The storage system of any of item 2 or 3, wherein the coupling mechanism includes a mechanical attachment.
5. The storage system of any of items 1-4, wherein the table portion defines a recess configured to receive the platform when the platform is in the stored configuration.
6. The storage system of item 5, wherein the table portion includes a top surface and a side surface that is oriented at an angle to the top surface, and the recess extends from the top surface.
7. The storage system of item 5, wherein the table portion includes a top surface and a side surface that is oriented at an angle to the top surface, and the recess extends from the side surface.
8. The storage system of any of items 1-7, wherein the platform includes an outer surface that defines a depression configured to receive a protrusion extending from the electronic device.
9. The storage system of any of items 1-8, wherein the platform includes a foot configured to prevent the electronic device from falling from the platform when the platform is in the deployed configuration.
10. A tether system for an electronic device, comprising:
   a support coupled to a structural member of a vehicle;
   a table portion coupled to the support;
   a hub coupled to the table portion; and
   a cable including a first end and a second end, wherein the first end is coupled to the hub and is coupled to a power source and the second end is coupled to a connector configured to connect to the electronic device, wherein the connector includes a charging connector configured to provide power to the electronic device and a locking connector configured to automatically secure the connector to the electronic device when the locking connector is inserted into an internal portion of the electronic device, wherein the locking connector is released from the internal portion of the electronic device in a different manner than it is inserted.
11. The tether system of item 10, wherein the hub includes a retractor configured to automatically draw the cable toward the hub when the connector is disconnected from the electronic device.
12. The tether system of any of items 10-11, further comprising a controller configured to predict contact between the vehicle an object, wherein the hub includes a retractor that is configured to automatically draw the cable toward the hub based on the prediction.
13. The tether system of item 12, wherein the retractor includes a damper configured to regulate a speed at which the cable is drawn toward the hub when the connector is disconnected from the electronic device.
14. The tether system of any of items 10-13, wherein the hub includes a brake configured to prevent the cable from extending away from the hub at a speed that is greater than a threshold speed.
15. The tether system of any of items 10-14, wherein the hub is positioned generally at a center of the table portion.
16. The tether system of any of items 10-15, wherein the hub is positioned generally at an outer edge of the table portion.
17. A system for securing an electronic device, comprising:
   a table portion within a movable structure;
   a platform coupled to the table portion and configured to hold the electronic device, wherein the platform is movable relative to the table portion between a stored configuration and a deployed configuration, wherein a surface of the platform is approximately aligned with a surface of the table portion when in the stored configuration;
   a hub coupled to the table portion; and
   a cable including a first end and a second end, wherein the first end is fixed to the hub and is coupled to a power source and the second end is coupled to a connector configured to connect to the electronic device.
18. The system of item 17, wherein the hub includes a retractor configured to automatically draw the cable toward the hub at a predetermined speed when the connector is disconnected from the electronic device.
19. The system of any of items 17-18, wherein the connector includes a charging connector configured to provide power to the electronic device and a locking connector configured to secure the connector to the electronic device.
20. The system of any of items 17-19, wherein the table portion includes a top surface and a side surface that is oriented at an angle to the top surface, and the table portion defines a recess that extends from the top surface or the side surface, wherein the recess is configured to receive the platform when in the stored configuration.

## Claims

1. A storage system for an electronic device, comprising:
a support coupled to a structural portion of a vehicle;
a table portion coupled to the support; and
a platform coupled to the table portion and configured to hold the electronic device, wherein the platform is movable relative to the table portion between a stored configuration and a deployed configuration, wherein the platform can be selectively adjusted to maintain a non-zero angular orientation relative to the table portion when in the deployed configuration, wherein the platform forms an outer surface of the table portion when in the stored configuration.

2. The storage system of claim 1, wherein the platform includes a coupling portion configured to secure the electronic device to the platform.

3. The storage system of claim 2, wherein the coupling portion includes a magnet.

4. The storage system of any of claims 2-3, wherein the coupling portion includes a mechanical attachment.

5. The storage system of any of claims 1-4, wherein the table portion defines a recess configured to receive the platform when the platform is in the stored configuration.

6. The storage system of claim 5, wherein the table portion includes a top surface and a side surface that is oriented at an angle to the top surface, and the recess extends from the top surface.

7. The storage system of claim 5, wherein the table portion includes a top surface and a side surface that is oriented at an angle to the top surface, and the recess extends from the side surface.

8. The storage system of any of claims 1-7, wherein the platform includes an outer surface that defines a depression configured to receive a protrusion extending from the electronic device.

9. The storage system of any of claims 1-8, wherein the platform includes a foot configured to prevent the electronic device from falling from the platform when the platform is in the deployed configuration.

10. The storage system of claim 9, wherein the foot includes a rotatable tab that is configured to rotate relative to a top surface of the table portion such that the rotatable tab can extend above the top surface.

11. The storage system of any of claims 1-10, wherein the platform is coupled to the table portion with a hinge that is configured to maintain an angular position until a threshold force is imparted to the hinge.

12. The storage system of claim 11, wherein the hinge is a friction hinge.

13. The storage system of any of claims 1-12, wherein the platform includes a leg that extends from the platform and is configured to interface with a depression defined by the table portion to maintain the platform in the deployed configuration.

14. The storage system of any of claims 1-13, wherein the platform includes a non-slip coating.

15. The storage system of any of claims 1-14, wherein the platform defines an undercut to facilitate moving the platform between the stored configuration and the deployed configuration.
